# EUROPEAN PATENT APPLICATION

(11) **EP 4 600 915 A1**
(43) Date of publication of application: **13.08.2025**
(21) Application number: 24156290.9
(22) Date of filing: 07.02.2024
(51) Int. Cl.: G06V 10/82, G06V 20/58, G06V 20/70

(54) **METHOD FOR LABELING UNKNOWN OBJECTS IN AN IMAGE**

(71) Applicant: Continental Automotive Technologies GmbH, 30175 Hannover (DE)
(72) Inventor: Shoeb, Youssef Omar, 30173 Hannover (DE)
(74) Representative: Aumovio Corporation

(57) **Abstract**

A computer-implemented method (100) for labeling unknown objects (150) in an image (104) comprises a step of receiving (102) the image (104), a step of determining (148) a first Region of Interest (134), whereas the first Region of Interest (134) is a sample of the image (104) comprised of the unknown objects (150), and a step of labeling the unknown objects (150) using a pretrained segmentation model (146) based on the first Region of Interest (134).

## Description

### Field of Invention

The present invention generally relates to the field of pattern recognition in images. In particular, the present invention relates to computer-implemented methods for labeling unknown objects in an image and correspondingly, a computer program product, a computer-readable storage medium, a data carrier signal, a system, and a vehicle.

### Technical Background and Problem

In the context of highly automated driving, the surrounding of a highly automated driving vehicle is usually captured by cameras and other sensors to construct a digital environment which is used to control various vehicle functions such as steering, accelerating, or braking. For safe execution, it is very important that objects in the surrounding of the vehicle are captured reliably. A key technology in constructing the digital environment is image recognition, the process of identifying objects or features in an image or video.

Several methods to detect and identify/label objects in an image are known in the state-of-the art. Usually, a confidence level is computed for each identified and labeled object, the confidence level being a measure for how reliable the assignment of the label is. If the confidence level is below a certain threshold, for example 75% (the confidence level is usually obtained by randomly sampling some images from a dataset of objects that are known to be incorrectly labeled and depends on the use case), the object is an unknown object, meaning it cannot be identified reliably enough for the purpose at hand. This may originate in poor image quality but may also happen when the underlying neural network, which performs the image recognition task, has not been trained properly. Hence, the object then may be a potentially hazardous or dangerous object.

In the context of highly automated driving, this means that, for example, a pothole might be identified as an unknown object which makes the task of planning a reaction in time more complicated. It might lead to an overreaction like an emergency stop or an underreaction like ignoring the object altogether. Hence, detecting road debris like road hazard or lost cargo from large distances is a major concern for highly automated driving. It is therefore desirable to reduce corresponding residual risks induced by unknown objects in an image recognition task.

The object of the present invention is to provide a method for labeling unknown objects in an image and correspondingly, a computer program product, a computer-readable storage medium, a data carrier signal, a system, and a vehicle, eliminating the disadvantages of the abovementioned state-of-the-art.

### Summary of the Invention

The object is met by the subject-matter of the independent claims. Advantageous embodiments of the invention are subject-matter of the dependent claims.

According to a first aspect of the present invention, a computer-implemented method for labeling unknown objects in an image comprises steps of receiving the image and determining a first Region of Interest (ROI), whereas the first ROI is a sample of the image comprised of the unknown objects. In general, a ROI can be a cohesive collection of pixels in the image or a region in the image, for example a rectangle or polygon. It is also possible to form the first ROI via multiple such collections or regions with gaps in between them. This will be the case, for example, when there are multiple unknown objects with a distance between them.

The task of labeling an object involves identifying patterns in an image and assigning a class or type to the pattern, such as "cat", "pothole", or "cargo". According to the first aspect of the invention, this task is of labeling the unknown objects is executed by a pretrained segmentation model and is based on the first ROI. In other words, the first ROI defines which regions in the image process and which to omit from processing by the pretrained segmentation model.

The pretrained segmentation model was trained to identify and label a multitude of objects such as different animals, vehicles, vegetation, or the like. Several pretrained segmentation models are available to perform this task, some if which are trained based on millions of images.

The key of the method is to preprocess the mask, i.e., the ROI, for which regions to obtain the labeling. Without preprocessing, the pretrained segmentation model will label every object in the image it can identify and thus, the information, which objects were initially unknown, would be lost. In such a case, all objects would appear to be known although some might have been labeled with a low confidence level. Even if the it is possible to label something below a certain confidence level as unknown, the whole image would have been processed which is costly in terms of computing power.

In an advantageous embodiment, the pretrained segmentation model comprises at least a prompt encoder, an image encoder, and a mask decoder. The prompt encoder encodes prompts such as points, bounding boxes, masks, or text to provide it to the mask decoder. The image encoder translates the data in an image into a digital format that can be stored and transmitted such as JPEG, PNG, or GIF. The mask decoder predicts masks on the basis of an image and prompt embeddings. All three are usually implemented as neural networks.

In an advantageous embodiment, the pretrained segmentation model generates an Out-of-Distribution (OOD) mask with the corresponding label for each unknown object. The OOD mask is a mask that contains all objects that have been previously identified as unknown objects and have been used to generate the first ROI. Under certain conditions, the OOD mask might be identical to the first ROI.

In an advantageous embodiment, the determination of the first ROI is performed at least in part by a pretrained mask segmentation model. The pretrained mask segmentation model is used to automatically detect regions in the image in which unknown objects must be detected, for example on roads due to security risks during highly automated driving.

In an advantageous embodiment, the pretrained mask segmentation model performs the steps of
- generating a second ROI, whereas the second ROI is a sample of the image comprised of objects labeled with a ROI label, and
- generating an OOD region, whereas the OOD region is comprised of objects that have been labeled with a confidence level below a threshold value.

It is known from the art that a mask segmentation model computes a confidence level which corresponds to the level of certainty that a label is correctly assigned to an object. The OOD region generated by the pretrained mask segmentation model comprises all those objects in the image, whose confidence level is below a given threshold value. In other words, an object is called unknown if the confidence level is not high enough. The threshold level may be expressed as a percentage such as 20%, 30% or 50%. The second ROI are labeled by a specific, predetermined ROI label. The ROI label is used to specify regions in which no unknown object should be in. In other words, the ROI label depends on the purpose at hand. For highly automated driving purposes, the ROI label might correspond to roads. With these steps, the pretrained mask segmentation model automatically generates a coarse ROI (second ROI) and masks those areas in the image, which contain unknown objects (via the OOD region). The unknown objects that are located within the second ROI are those relevant for the purpose at hand, for example, highly automated driving, as defined by the ROI label.

In an advantageous embodiment, the second ROI is morphed to achieve a cohesive ROI. Due to bad image quality or the nature of the detected objects it can happen, that the second ROI contains gaps. For example, if a piece of cargo is detected on a road, the pretrained mask segmentation model will output generate a mask for the road in which the road has a gap, because the road is hidden by the piece of cargo. In reality, there is road behind the piece of cargo. To account for this fact, it is beneficial to morph the second ROI to obtain a ROI that does not have those artificial gaps.

In an advantageous embodiment the second ROI or the cohesive ROI are combined with the OOD region. This is done in such a way so the resulting third ROI is comprised of those unknown objects that are located within both the OOD region and either the second ROI or the cohesive ROI, depending on whether the second ROI was morphed into a cohesive ROI or not.

In an advantageous embodiment a removal of false-positives in the third ROI is performed to generate the first ROI. This is a beneficial step to further enhance the quality of unknown objects. Methods to perform such a false-positive detection and subsequent removal are readily available to the skilled person in the art.

In an advantageous embodiment the Region of Interest label corresponds to a road. As explained further above, this is especially advantageous in the case of highly automated driving.

In general, the above-described method improves the accuracy for safety relevant decision-making processes which are highly depend on the quality of data that enters the computation. By preprocessing the input data for a pretrained segmentation model, loss of information (such as which object was unknown in the first place) and overuse of computation power can be avoided.

According to a second aspect of the present invention, a computer program product comprises instructions which, when the program is executed by a computer, cause the computer to carry out the steps of any of the above-described method. The computer program product might be implemented in a programming language such as Python, C, C#, or the like.

According to a third aspect of the present invention, a computer-readable storage medium comprises instructions which, when executed by a computer, cause the computer to carry out the steps of any of the above-described method. The computer-readable storage medium might correspond to Flash memory, a solid-state drive (SSD), or the like.

According to a fourth aspect of the present invention, a data carrier signal carries the above -described computer program product. The data carrier signal might correspond to a wireless signal or a wire-bound signal. An over-the-air-update for example could utilize a radio signal to broadcast the computer program product to a vehicle in order to provide bug fixes.

According to a fifth aspect of the present invention, a system for labeling unknown objects in an image comprises at least an image capturing unit and a computation unit, which are communicatively coupled. The system might be realized in a single unit. However, it is also possible to distribute the method steps to multiple units. In a vehicle, it then is possible to use existing devices such as cameras and central computing units such as High-Performance-Computers (HPCs) to avoid the costly installation of dedicated hardware.

In an advantageous embodiment, the image capturing unit is a camera and the computation unit comprises at least a processor and a computer-readable storage medium.

According to a sixth aspect of the present invention, a vehicle comprising the above-described system. The vehicle might correspond to a car, a truck, a plane, a train, or the like.

### Brief Description of the Drawings

The disclosed invention will be further discussed in the following based on preferred embodiments presented in the attached drawings. However, the disclosed invention may be embodied in many different forms and should not be construed as limited to said preferred embodiments. Rather, said preferred embodiments are provided for thoroughness and completeness, and fully convey the scope of the invention to the skilled person.

The following detailed description refers to the attached drawings, in which:
Figure 1 depicts a flow diagram of an embodiment of a computer-implemented method for labeling unknown objects in an image;
Figure 2 depicts a flow diagram of the method of Figure 1 applied to an image;
Figure 3 depicts a system that is able to perform the method of Figure 1; and
Figure 4 depicts a vehicle comprising the system of Figure 3.

### Detailed Description of the Drawings

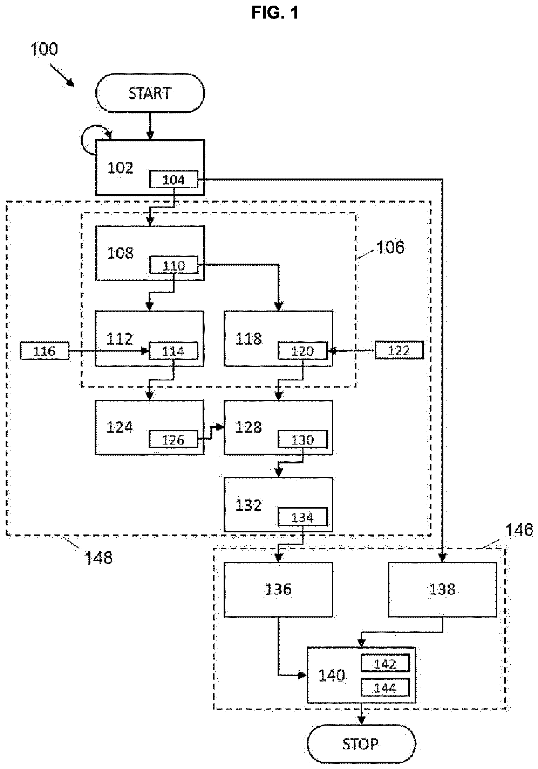

Figure 1 depicts a flow diagram of an embodiment of a computer-implemented method (100) for labeling unknown objects (150) in an image (104).

The method (100) can be divided into 3 high-level steps. First, an image (104) is received in a receiving step (102). In a subsequent determination step (148), a first Region of Interest (134) is determined. The first Region of Interest (134) is a sample of the image (104) comprised of unknown objects (150) in the image (104), i.e., objects that cannot be identified with high confidence. Then, the unknown objects (150) are labeled using a pretrained segmentation model (146) based on the first Region of Interest (134). Unknown objects (150) within the first Region of Interest (134) are labeled by the pretrained segmentation model (146) while objects (152) outside that region, whether known or unknown, are not processed to be labeled.

Figure 1 also shows a detailed implementation of the high-level steps. In the receiving step (102), an image (104) is received, for example, by an image capturing unit (168) such as a camera. However, other types of image capturing units (168) can be used, as long as their associated data can be used to train a segmentation model (106, 146). For example, a Radar or Lidar sensor might also be used as the image capturing unit (168) because Radar and Lidar data show object specific patterns that can be analyzed and labeled by a segmentation model (106, 146).

The image (104) is then forwarded to a mask segmentation model (106), in which it is segmented in a segmentation step (108) into a segmented image (110). In other words, the image (104) is partitioned into several regions, the pixels of which share certain characteristics. The characteristics may be defined via labels (144) as belonging to an object, such as an animal, vehicle, plant, or the like. The segmented image (110) might result from a semantic segmentation in which each pixel in the image (104) is assigned to a label (144). Each detected object (152) will therefore be labeled and assigned a confidence level which is a measure for how certain the label (144) was assigned correctly.

The segmented image (110) is then used in a first generation step (112) to generate a second Region of Interest (114). The second Region of Interest (114) is chosen based on where it is paramount to label unknown objects (150). For highly automated driving purposes, the second Region of Interest (114) might correspond to roads. The selection which objects (152) to include is based on a Region of Interest label (116). Hence, the Region of Interest label (116) may correspond to "road" and/or "street" and/or "avenue" or the like in case of highly automated driving, because it is very important to identify unknown objects (150) in these regions to allow for safe driving instructions.

In Figure 1, the second Region of Interest (114) is further processed in a morphing step (124) in which potential gaps in the second Region of Interest (114) are closed, resulting in a cohesive Region of Interest (126). Such gaps might result from objects (152) detected within the second Region of Interest (114), leaving a gap when the cohesive Region of Interest (114) is constructed by keeping only the objects (152) labeled with the Region of Interest label (116) in the previous first generation step (112).

The segmented image (110) is also provided to a second generation step (118), in which an Out-of-Distribution region (120) is generated. The Out-of-Distribution region (120) is a sample of the image (104) that contains all objects (152) with a confidence level below a predefined threshold value (122). The threshold value (122) might be a percentage such as 25% or 50%. All objects (152) with a confidence level below the threshold value (122) are unknown objects (150) and together, they form the Out-of-Distribution region (120).

In a combining step (128), the Out-of-Distribution region (120) and the cohesive Region of Interest (126) are combined into a third Region of Interest (130). The third Region of Interest (130) is comprised of those unknown objects (150) that are located within both the Out-of-Distribution region (120) and the cohesive Region of Interest (126).

Next, false-positives are removed from the third Region of Interest (130) in a removal step (130), generating the first Region of Interest (134), which enters a prompt encoder (136) of the pretrained segmentation model (146).

Also, the image (104) is provided to the image encoder (138) of the pretrained segmentation model (146). Based on the region provided by the prompt encoder (136) and the image (104) encoded by the image encoder (138), a mask decoder (140) will compute an Out-of-Distribution mask (142) which comprises all unknown objects (150) (without false-positives). The mask decoder (140) also provides labels (144) for all unknown objects (150).

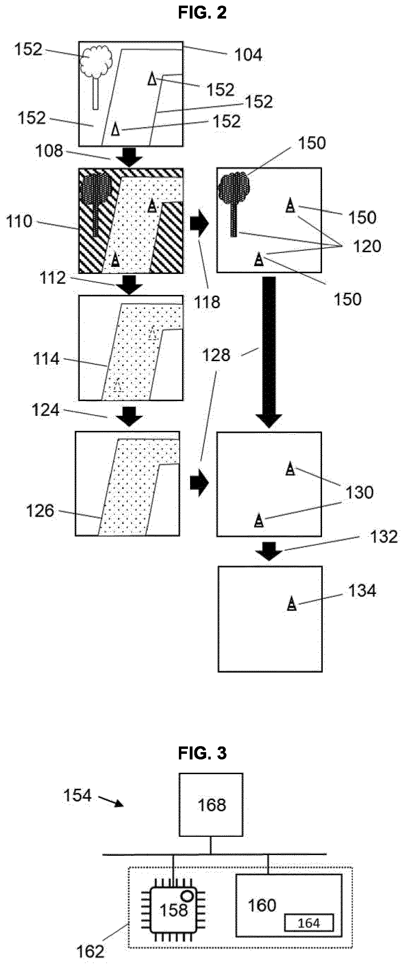

Some steps of the method (100) described with the help of Figure 1 will now be described in a more visual manner in Figure 2. Figure 2 depicts a flow diagram of the method (100) of Figure 1 applied to an image (104).

The image (104) in Figure 2 contains several objects (150), such as a section of a road, a tree, a meadow, and two potholes. In the segmentation step (108), the image (104) is segmented into the segmented image (110) (all objects (150) are now highlighted by different visual patterns).

Next, the segmented image (110) is further processed to generate the second Region of Interest (114) in the first generation step (112). This generation is based on the provided Region of Interest label (116) which corresponds to roads, streets, avenues, and the like in the example of Figure 2. Note that the second Region of Interest (114) contains two gaps due to the potholes being identified (although with low confidence). Therefore, the cohesive Region of Interest (126) is generated in the morphing step (124) so that the detected road, i.e., the second Region of Interest (114), does not have any gaps.

In parallel, the segmented image (110) is also processed in the second generation step (118) to extract only objects that have been labeled a confidence level below the provided threshold value (122). In the case of Figure 2, the tree, and the two potholes are both labeled with such a low confidence, and together, they form the Out-of-Distribution region (120).

Now, the Out-of-Distribution region (120) and the cohesive Region of Interest (126) are combined in the combining step (128) to produce the third Region of Interest (130), which only contains those unknown objects (150), which are located in the cohesive Region of Interest (126), that is, on the road.

In the removal step (132), the third Region of Interest (130) is further processed to remove false-positives (which can be achieved by various methods known to the skilled person in the art). In the example of Figure 2, one of the potholes have been removed. The resulting first Region of Interest (134) can then be fed to the prompt decoder (136) of the pretrained segmentation model (146) to generate the Out-of-Distribution mask (142) and corresponding labels (144).

Figure 3 depicts a system (154) that is able to perform the method (100) of Figure 1. The system (154) is comprised of an image capturing unit (168) and a computation unit (162). The image capturing unit (168) might correspond to a camera or a Radar or Lidar sensor. The computation unit (162) comprises a processor (158) and a computer-readable storage medium (160). All components are communicatively coupled.

A computer program product (164) is stored on the computer-readable storage medium (160). The computer program product (164) comprises instructions, written in a programming language, which, when the program (164) is executed by the processor (158), cause the processor (158) to carry out the steps of the method (100) of Figure 1. The computer-readable storage medium (160) might also be implemented to store additional content, for example to serve as a buffer for the images (104) taken by the image capturing unit (168). The computer-readable storage medium (160) might also be implemented as multiple storage media, some of which might be implemented as cloud storage while others might be implemented as local storage such as hard drives.

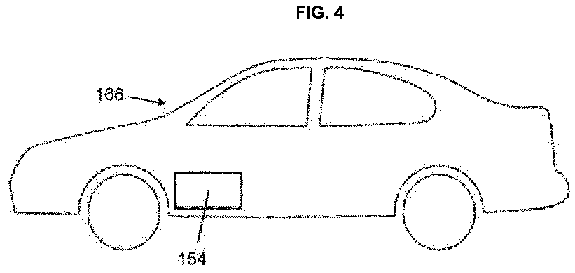

Figure 4 depicts a vehicle (166) comprising the system (154) of Figure 3. In the example of Figure 4, the system (154) is implemented as a single unit. However, the system (154) might be implemented as a distributed system. For example, the image capturing unit (168) might be a camera also used for other services of the vehicle (166), such as a camera for parking guidance. Similarly, the components of the computing unit (162) might originate from a central computing unit of the vehicle (166).

**Reference Signs**

| | |
|---|---|
| 100 | Method |
| 102 | Receiving step |
| 104 | Image |
| 106 | Mask segmentation model |
| 108 | Segmentation step |
| 110 | Segmented image |
| 112 | First generation step |
| 114 | Second Region of Interest |
| 116 | Region of Interest label |
| 118 | Second generation step |
| 120 | Out-of-Distribution region |
| 122 | Threshold value |
| 124 | Morphing step |
| 126 | Cohesive Region of Interest |
| 128 | Combining step |
| 130 | Third Region of Interest |
| 132 | Removal step |
| 134 | First Region of Interest |
| 136 | Prompt encoder |
| 138 | Image encoder |
| 140 | Mask decoder |
| 142 | Out-of-Distribution mask |
| 144 | Label |
| 146 | Pretrained segmentation model |
| 148 | Determining step |
| 150 | Unknown objects |
| 152 | Objects |
| 154 | System |
| 158 | Processor |
| 160 | Computer-readable storage medium |
| 162 | Computation unit |
| 164 | Computer program product |
| 166 | Vehicle |
| 168 | Image capturing unit |

## Claims

1. A computer-implemented method (100) for labeling unknown objects (150) in an image (104), comprising the steps:
a) receiving (102) the image (104),
b) determine (148) a first Region of Interest (134), whereas the first Region of Interest (134) is a sample of the image (104) comprised of the unknown objects (150), and
c) label the unknown objects (150) using a pretrained segmentation model (146) based on the first Region of Interest (134).

2. The method according to claim 1, wherein the pretrained segmentation model (146) comprises at least a prompt encoder (136), an image encoder (138), and a mask decoder (140).

3. The method according to claim 1 or 2, wherein the pretrained segmentation model (146) generates an Out-of-Distribution mask (142) with the corresponding label (144) for each unknown object (150).

4. The method according to one of the preceding claims, wherein the determination (148) of the first Region of Interest (134) is performed at least in part by a pretrained mask segmentation model (106).

5. The method according to claim 4, wherein the pretrained mask segmentation model (106) performs the steps:
a) generating (112) a second Region of Interest (114), whereas the second Region of Interest (114) is a sample of the image (104) comprised of objects (152) labeled with a Region of Interest label (116), and
b) generating (118) an Out-of-Distribution region (120), whereas the Out-of-Distribution region (120) is comprised of objects (152) that have been labeled with a confidence level below a threshold value (122).

6. The method according to claim 5, further comprising morphing (124) of the second Region of Interest (114) to achieve a cohesive Region of Interest (126).

7. The method according to claim 5 or 6, further comprising combining (128) the second Region of Interest (114) or the cohesive Region of Interest (126) with the Out-of-Distribution region (120) so that a resulting third Region of Interest (130) is comprised of those unknown objects (150) that are located within both the Out-of-Distribution region (120) and either the second Region of Interest (114) or the cohesive Region of Interest (126).

8. The method according to claim 7, further comprising a removal (132) of false-positives in the third Region of Interest (130) to generate the first Region of Interest (134).

9. The method according to one of claims 5 to 8, wherein the Region of Interest label (116) corresponds to a road.

10. A computer program product (164) comprising instructions which, when the program is executed by a computer, cause the computer to carry out the steps of the method of one of the claims 1 to 9.

11. A computer-readable storage medium (160) comprising instructions which, when executed by a computer, cause the computer to carry out the steps of the method of one of the claims 1 to 9.

12. A data carrier signal carrying the computer program product (164) of claim 10.

13. A system (154) for labeling unknown objects (150) in an image (104), the system (154) comprising at least:
a) an image capturing unit (168), and
b) a computation unit (162) communicatively coupled to the image capturing unit.

14. A system according to claim 13, wherein the image capturing unit (168) is a camera and the computation unit (162) comprises at least a processor (158) and a computer-readable storage medium (160).

15. A vehicle (166) comprising the system (154) according to one of claims 13 or 14.
